(19) Europäisches Patentamt
European Patent Office
Office européen des brevets

(11) EP 2 403 931 B1

(12) # EUROPEAN PATENT SPECIFICATION

(45) Date of publication and mention of the grant of the patent:
**19.03.2014 Bulletin 2014/12**

(21) Application number: **10700439.2**

(22) Date of filing: **19.01.2010**

(51) Int Cl.:
***C11D 3/395*** *(2006.01)* ***C11D 3/40*** *(2006.01)*
***C09B 31/08*** *(2006.01)*

(86) International application number:
**PCT/EP2010/050593**

(87) International publication number:
**WO 2010/099997 (10.09.2010 Gazette 2010/36)**

(54) **DYE RADICAL INITIATORS**

FARBSTOFF-RADIKALINITIATOREN

INITIATEURS RADICALAIRES DE COLORANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.03.2009 EP 09154380**

(43) Date of publication of application:
**11.01.2012 Bulletin 2012/02**

(73) Proprietors:
- **Unilever PLC**
**London EC4Y 0DY (GB)**
Designated Contracting States:
**CY GB IE MT**
- **Unilever NV**
**3013 AL Rotterdam (NL)**
Designated Contracting States:
**AT BE BG CH CZ DE DK EE ES FI FR GR HR HU IS IT LI LT LU LV MC MK NL NO PL PT RO SE SI SK SM TR**

(72) Inventor: **BATCHELOR, Stephen, Norman**
**Wirral Merseyside CH63 3JW (GB)**

(74) Representative: **Avila, David Victor**
**Unilever Patent Group**
**Colworth House**
**Sharnbrook**
**Bedford**
**MK44 1LQ (GB)**

(56) References cited:
**WO-A-02/088292 WO-A-2007/082803**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 403 931 B1

## Description

FIELD OF INVENTION

The present invention relates to the delivery of dyes to fabrics.

BACKGROUND OF INVENTION

Organic radicals are carbon containing compounds that are paramagnetic. Most organic radicals are unstable and rapidly decay to non-paramagnetic compounds. Unstable organic radicals are useful reactive intermediates that may be used for a number of valuable chemical and biological processes. Unstable Organic radicals are well known to initiate polymerisation reactions that lead to technically useful polymers. WO 01/44127 and WO 01/44424 (both Unilever) teach the use of unstable organic radical to bleach substrates. WO 04/072217 (Unilever) teaches the use of photolytically generated unstable organic radicals to kill mammalian cells.

Radical photoinitiators are widely used to efficiently produce unstable organic radicals. Photoinitiators absorb UV light and then undergo cleavage or abstraction reaction to yield radicals. Photoinitiators are difficult to use on many heterogeneous substrates due to low substantivity.

WO 02/088292 relates to radical initiator composition which can be used in colour care and stain treatment systems, including surfactant compositions.

WO2006/024612, to CIBA, discloses dyes linked to phthalocyanine compounds that act as singlet oxygen generators in the presence of light.

WO 2007/082803 relates to a process for improving the whiteness of fibres, when treated with at least one disperse dye in a laundry process.

Summary of the Invention

Radical photoinitiators are difficult to target to textiles. We have found that linking radical initiators to a fabric substantive dye permits targeting of the radical initiator to a textile. We have observed photobleaching and shading of textiles treated with the dye radical photoinitiators. We have also observed that the dye does not show substantial fading due to the radical production but fabric stains are bleached.

In one aspect the present invention provides a detergent composition comprising from 2 to 70 wt % of a surfactant together with a ketonic radical photoinitiator dye of the following structure (I):

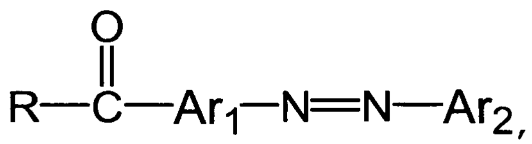

wherein, the carbonyl shown in the structure is non-enolizable, and the ketonic radical photoinitiator dye is comprised of an aromatic group, $Ar_1$, and the $Ar_1$ is directly covalently bound to an azo group, the azo group directly covalently bound to a second aromatic, $Ar_2$, and R is selected from:

a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms;
a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms and forms a six or five membered ring by being covalently bound to $Ar_1$.

In another aspect the present invention provides a domestic method of treating a textile, the method comprising the steps of:

(i) treating a textile with an aqueous solution of the ketonic radical photoinitiator dye, the aqueous solution comprising from 1 ppb to 1 ppm of the ketonic radical photoinitiator dye; and, from 0.0 g/L to 3 g/L of a surfactant;
(ii) optionally rinsing; and,
(iii) drying the textile in the presence of natural sunlight.

It is preferred that the aqueous solution used in the method has a fluorescer present and/or perfume.

The present invention also extends to the ketonic radical photoinitiator dye. Preferred ketonic radical photoinitiator dyes are detailed immediately below.

In a further aspect the present invention also provides a ketonic radical photoinitiator dye of the form:

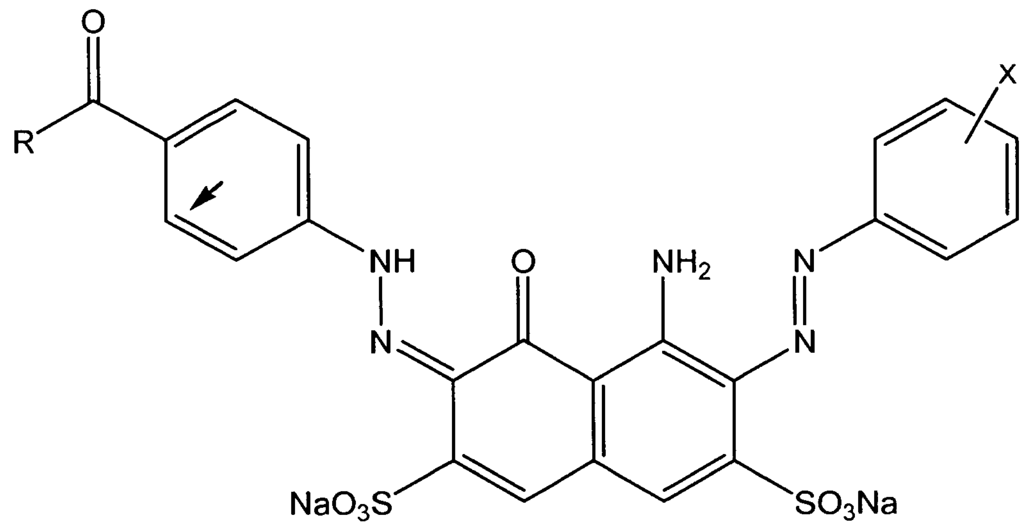

,

wherein, the carbonyl bound directly to R shown in the structure is non-enolizable, and:

X is para and/or ortho and X is selected from: -H; -CN; -F; -Cl; -Br; $-NO_2$; $-CH_2Cl$; $-CF_3$; $-NHC(O)CH_3$; $-N^+(Me)_3$; $-N^+(Et)_3$; and, $-N^+(Pr)_3$; and,
R is selected from:

a group having from 3 to 30, preferably 3 to 24, carbon atoms having from: 0 to 2 phosphorous atoms, from 0 to 3 sulphur atoms, from 0 to 3 oxygen atoms, and from 0 to 3 nitrogen atoms;
a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms and forms a six membered ring by being covalently bound at the position indicated by the arrow.

Preferably the ketonic radical photoinitiator dye is present in the detergent composition from 0.00001 to 1 wt%, most preferably 0.0001 to 0.01 wt%.

DETAILED DESCRIPTION OF THE INVENTION

The R (and Ar1) group of the ketonic radical photoinitiator dye is non-enolisable with the ketone (bridging ketone) directly bound to Ar1 (and R). That is to say that the R group does not carry a hydrogen alpha to the ketone. The process of keto-enol tautomerism is shown directly below in the schematic.

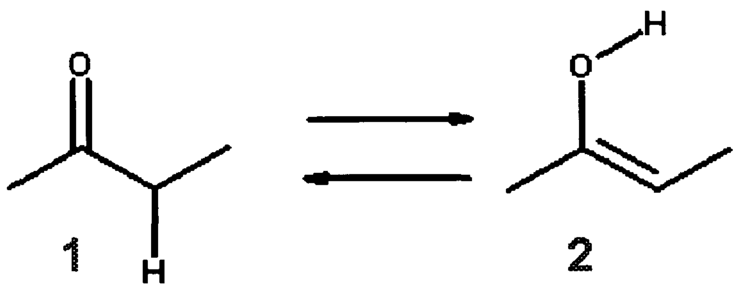

Preferably, the ketonic radical photoinitiator dye is blue or violet in colour. Preferably the ketonic radical photoinitiator dye gives a blue or violet colour to the cloth with a hue angle of 250-345, more preferably 265 to 330, most preferably 270 to 300. The cloth used to determine the hue angle is white bleached non-mercerised woven cotton sheeting.

It is preferred that $Ar_1$ and $Ar_2$ are independently selected from: phenyl; naphthyl; pyridinyl; pyrimidinyl; pyrazinyl,

triazolyl; pyridazinyl; 1,3,5-triazinyl; quinolinyl; isoquinolinyl; quinoxalinyl; imidazolyl; pyrazolyl; benzimidazolyl; isothiazolyl; oxazolidinyl; pyrrolyl; carbazolyl; indolyl; isoindolyl; furanyl; benzofuranyl; isobenzofuranyl; isoindolyl; thiophenyl; benzothiophenyl; benzo[c]thiophenyl; imidazolyl; purinyl; indazolyl; oxazolyl; benzoxazolyl; isoxazolyl; benzisoxazolyl; thiazolyl; benzothiazolyl; naphthalenyl; quinolinyl; isoquinolinyl; pyrazinyl; quinoxalinyl; pyrimidinyl; quinazolinyl; pyridazinyl; and, cinnolinyl, and wherein nitrogen containing hetrocycles are neutral or quaternized by alkyl groups. The alkyl groups of the quaternized nitrogen containing hetrocycles are preferably methyl or ethyl.

It is more preferred that $Ar_1$ and $Ar_2$ are independently selected from: phenyl; and, naphthyl.

$Ar_2$ is preferably substituted by an amine group, most preferably $-NH_2$.

The ketonic radical photoinitiator dye is preferably of the form:

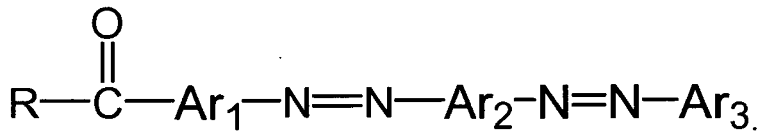

$Ar_3$ may substituted by a further azo group which is covalently bound to an aromatic or an hetroaromatic group which in turn may also be substituted by a further azo group which is covalently bound to an aromatic or an hetroaromatic group; these further aromatic or an hetroaromatic group are selected from $Ar_1$ ($Ar_2$) as defined herein. The groups $Ar_1$, Ar2, (and if present) Ar3 and further aromatic are all independently selected.

The ketonic radical photoinitiator dye is most preferably of the form:

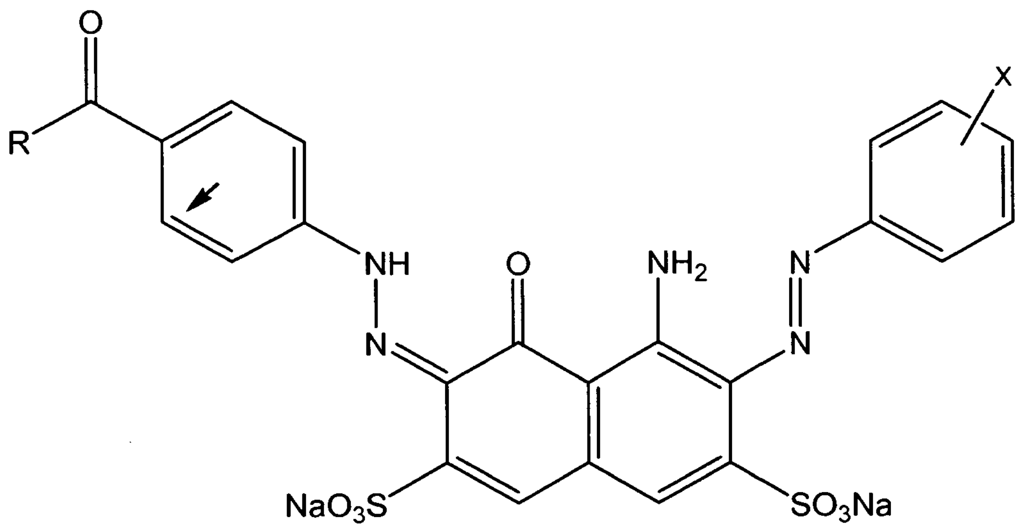

,

wherein, the carbonyl bound directly to R shown in the structure is non-enolizable, and:

X is para and/or ortho and is H or an electron withdrawing group; and,
R is selected from:

a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms;
a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms and forms a six membered ring by being covalently bound at the position indicated by the arrow. The X substituent is most preferably para. X is more preferably selected from: -CN; -F; Cl; -Br; $-NO_2$; $-CH_2Cl$; $-CF_3$;$-NHC(O)CH_3$; $-N^+(Me)_3$; $-N^+(Et)3$; and, $-N^+(Pr)_3$.

R is preferably selected from: phenyl; 2,4,6-trimethylphenyl; a phosphine oxide; a phosphinate; $-CR_2R_3R_4$, wherein $R_2$, $R_3$, $R_4$ may be independently selected from -C1-C8-alkyl;- OC1-C8-alkyl; phenyl; -OH; amine, CN, halogen, and - $SO_2$-phenyl, with the proviso that not more than one of $R_2$, $R_3$, $R_4$ is -OH, phenyl; amine, CN, halogen, and $-SO_2$-phenyl and no more than two of $R_2$, $R_3$, $R_4$ are -OC1-C8-alkyl; and, a group such that $RCOAr_1$ forms a group selected from: a quinone, thioxanthone and xanthone. A preferred class of dye radical photoinitiator are those in which

$RCOAr_1$ forms a group selected from: a quinone, thioxanthone and xanthone; these structures are found in some of the preferred examples of the ketonic radical initiator below.

Preferred groups for R are those selected from: C6H5-;2,4,6-trimethylphenyl;

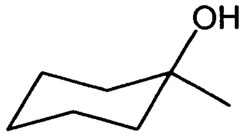

;

p-Me-$C_6H_4$-$S(O)_2$-$C(Me)_2$-; $Me_2C(CN)$-; $Me_2C(OH)$-;

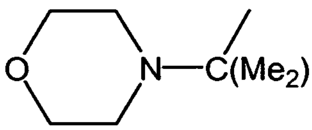

;

$C_6H_5$-$C(Me)_2$-; $C_6H_5$-C(O)-P(O)(*n*-Pr)-; and, t-Bu-. R is most preferably phenyl.

Electron-withdrawing groups used herein are groups having a Hammett substituent constant σp value of at least 0.1, more preferably at least 0.30.

Specific examples of the electron-withdrawing group having a σp value of 0.20 or more include an acyl group, an acyloxy group, a carbamoyl group, an alkyloxycarbonyl group, an aryloxycarbonyl group, a cyano group, a nitro group, a dialkylphosphono group, a diarylphosphono group, a diarylphosphinyl group, an alkylsulfinyl group, an arylsulfinyl group, an alkylsulfonyl group, an arylsulfonyl group, a sulfonyloxy group, an acylthio group, a sulfamoyl group, a thiocyanato group, a thiocarbonyl group, a halogenated alkyl group, a halogenated alkoxy group, a halogenated aryloxy group, a halogenated alkylamino group, a halogenated alkylthio group, an aryl group substituted by other electron-withdrawing group having a op value of 0.20 or more, a heterocyclic group, a halogen atom, an azo group.

The ketonic radical photoinitiator dye may be further substituted by uncharged organic groups having a total molecular weight of less than 400. Preferred uncharged organic groups are selected from: $NHCOCH_3$, $CH_3$, $C_2H_5$, $CH_3O$, $C_2H_5O$, amine, Cl, F, Br, I, $NO_2$, $CH_3SO_2$, and CN.

Preferred examples of the ketonic radical photoinitiator dye are:

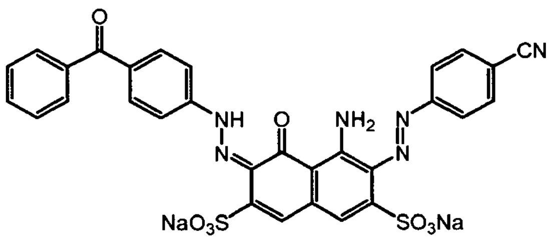

;

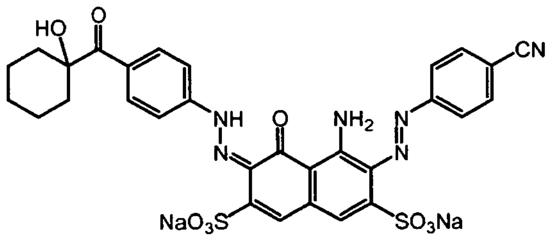

;

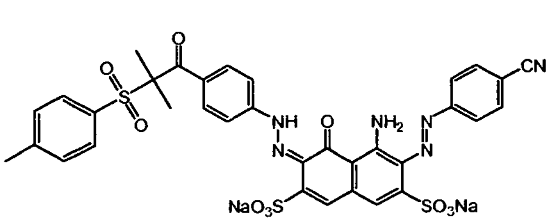

;

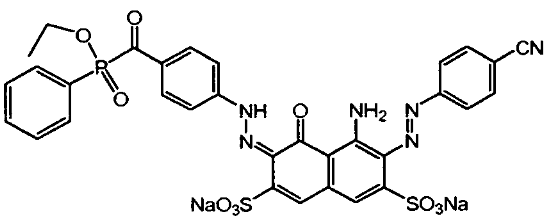

;

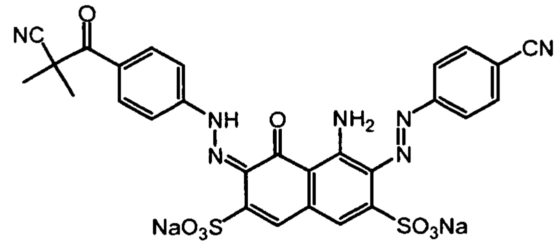
;
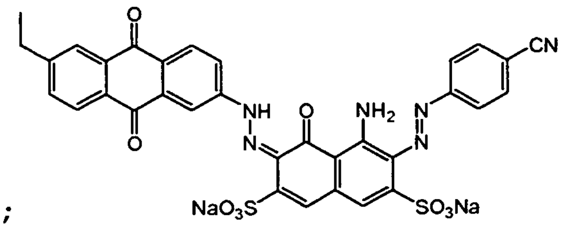

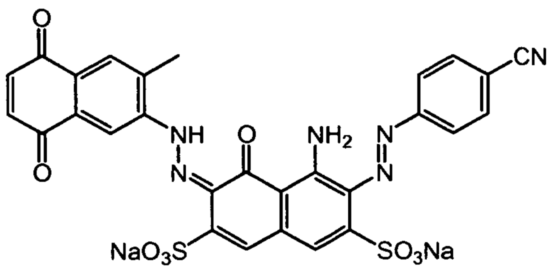
;
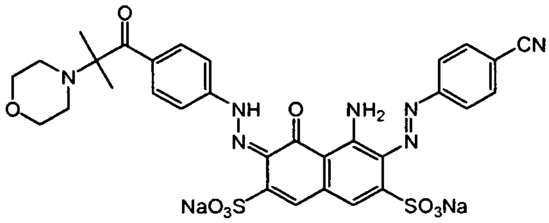
;

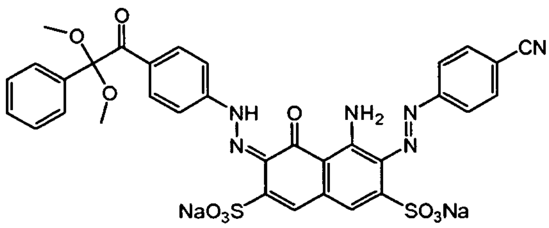
;
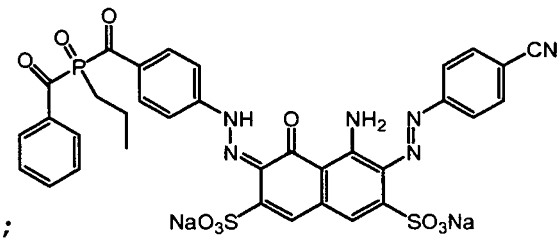
;

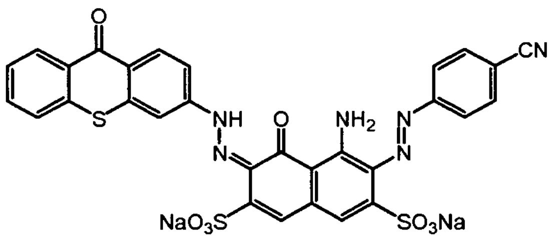
;
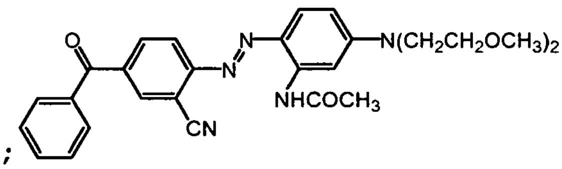
;

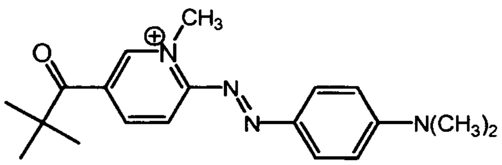
;
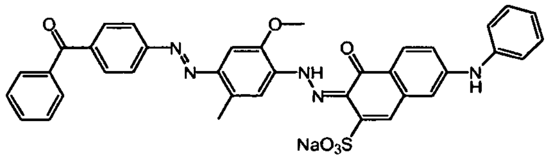
;

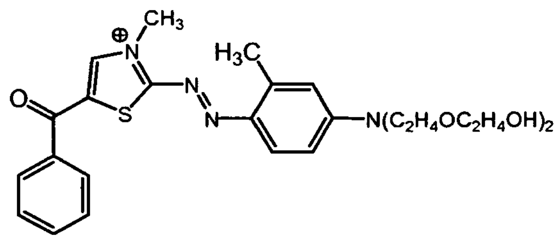
;
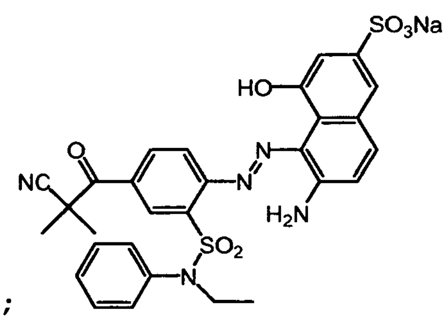
;

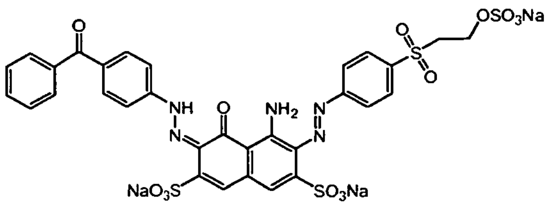

;

and,

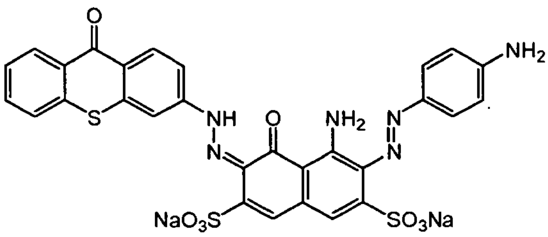

.

OTHER DYES

In a preferred embodiment of the invention, other shading colourants may be present that build up over multiple washes, thereby counteracting long term yellowing and greying effect. They are preferably selected from blue and violet pigment such as pigment violet 23, solvent and disperse dyes such as solvent violet 13, disperse violet 28, bis-azo direct dyes such as direct violet 9, 35, 51 and 99, and triphenodioxazine direct dyes such as direct violet 54.

Even more preferred is the presence of acid azine dyes as described in WO 2008/017570; the level of the acid azine dyes should be in the range from 0.0001 to 0.1 wt%.

Additional Photobleaches such as sulphonated Zn/Al phthalocyanins may be present.

For addition to granular formulation the ketonic radical photoinitiator dye may be added to the slurry to be spray dried or added via post-dosed granules.

In granular formulation the dye ketonic radical photoinitiator dye may be granulated with an acidic component to reduce hydrolysis on storage as discussed in W02007/039042 (Unilever).

In a preferred embodiment the ketonic radical photoinitiator dye powder obtained from the ketonic radical photoinitiator dye synthesis is mixed with a $Na_2OS_4$ or NaCl or pre-prepared granular base or full detergent formulation to give a 0.1 to 5 dye wt% mixture. This ketonic radical photoinitiator dye mix is then mixed into the granular formulation. The ketonic radical photoinitiator dye powder is preferably formed by drying a liquid slurry or solution of the ketonic radical photoinitiator dye, for example by vacuum drying, freeze drying, drying in drum dryers, Spin Flash ® (Anhydro), but most preferably by spray drying. The ketonic radical photoinitiator dye powder may be ground before, during or after the making of the slurry. This grinding is preferably accomplished in mills, such as for example ball, swing, bead or sand mills, or in kneaders.

Other ingredients such as dispersants or alkali metal salts may be added to the liquid slurry. The ketonic radical photoinitiator dye powder preferably contains 20 to 100 wt% of the dye.

Preferably, the ketonic radical photoinitiator dye powder has an average particle size, APS, from 0.1 to 300 microns, preferably 10 to 100 microns. Preferably this is as measured by a laser diffraction particle size analyser, preferably a Malvern HP with 100 mm lens.

SURFACTANT

The composition comprises between 2 to 70 wt % of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of

ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

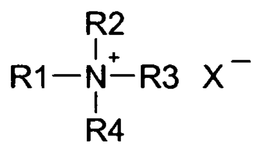

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

BUILDERS OR COMPLEXING AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium

tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\quad Al_2O_3.\quad 0.8\text{-}6\ \ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(Nmethyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

POLYMERS

The composition may comprise one or more polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

The laundry treatment composition may contain an enzyme.

**Examples**

**Example 1: Synthesis**

Azo coupling reactions are well discussed in the literature, for example Industrial Dyes, K.Hunger ed., Wiley VCH 2003 ISBN 3-527-30426-6.

The ketonic radical photoinitiator dye below (BPCN) was synthesised according to the 2 stage scheme:

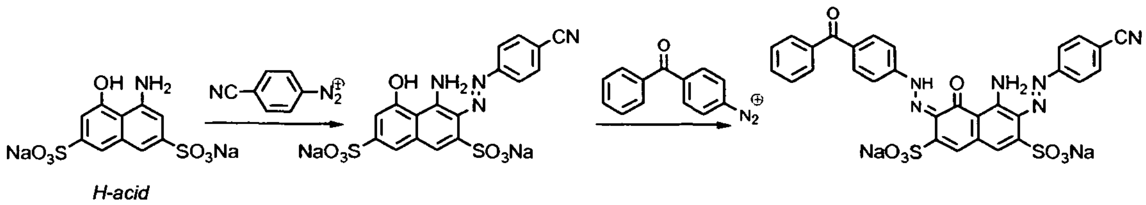

BPCN

In the first stage, conducted at pH=1-2 H-acid was coupled with a diazonium salt to form an "acid coupled" monoazo derivative in which coupling had taken place *ortho* to the amino group of H-acid (1-Amino-8-naphthol-3,6-disulphonic acid). In the second stage conducted at pH=7, the coupling of the diazonium salt took place *ortho* to the hydroxyl group.

The diazonium salts were prepared following standard procedure from the amine in HCl/ice with sodium nitrate. Sulphamic acid was added until a negative starch iodide test was obtained. Once prepared the diazonium salts were immediately used for the coupling reactions.

The final product was purified by dissolving in water and adding acetone until precipitation occurs. The precipitate was then collected as final product and dried.

The structure was confirmed by Mass spectroscopy (negative ion electrospray). The spectrum showed a large ion at m/z 655, which is consistent with the pseudo molecular ion $(M-H)^-$ for the proposed formula. HPLC revealed the product to be of high purity (>95%).

In this structure R and $Ar_1$ are both phenyl and $Ar_2$ is a naphthol. The naphthol carrying a further aromatic $Ar_3$ via an azo group which is p-cyanophenyl.

**Example 2: UV-VIS Spectrum**

The UV-VIS spectrum of the ketonic radical photoinitiator dye of example 1 was recorded in water, and the following results obtained

in the range 300-800nm.

| 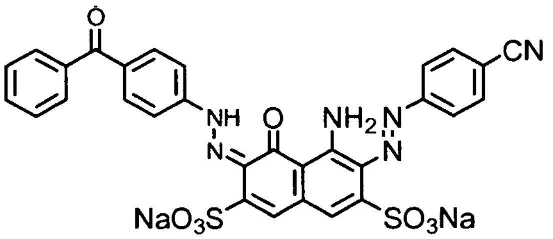 BPCN | | 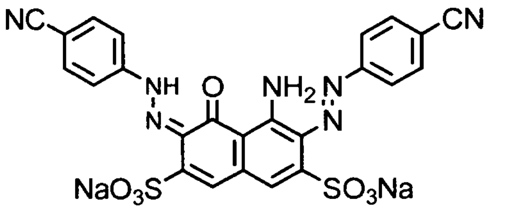 *Comparative example* | |
|---|---|---|---|
| $\lambda$max / nm | $\varepsilon$ / L $mol^{-1}cm^{-1}$ | $\lambda$max / nm | $\varepsilon$ / L $mol^{-1}cm^{-1}$ |
| 607 | 47000 | 600 | 47000 |
| 398 | 12600 | 395 | 13200 |
| 323 | 27800 | 313 | 30200 |

**Example 3: Radical Generation**

Generation of unstable organic radicals from the compound of Example 1 (BPCN) was shown by mean of a photo-CIDNP experiment. The CIDNP technique is described in detail in J.Phys.Chem. 1996, 100, 556-564. Observation of polarized (non-Boltzmann) resonance in NMR signals, following light excitation of the sample indicate the presence of photoinitiated radicals and their subsequent reaction products.

Steady state CIDNP experiments were done using a 200W Highpressure mercury lamp (Hamamatsu LC4) as the irradiation source. After presaturation and a 300ms lamp flash, the observing radiofrequency pulse (1.5$\mu$s, 30°) was applied to record CIDNP spectra. A lamp pulse was used to avoid depletion of sample. All samples were bubbled with argon and kept in dark at room temperature prior to use.

The sample was dissolved in deuterated methanol. When the CIDNP experiment was run in the absence of a lamp flash, no NMR signals were observed due to the presaturation pulse. In the presence of a lamp flash Absorptive polarised NMR signals were observed at the following ppm, 7.53, 7.57, 7.70, 7.72, 7.75, 7.79, 7.82, 7.86, 7.91, 8.2.

In a comparative example the photoinitiator benzophenone also gave polarized NMR signals.

The compound, BPCN, produces unstable organic radical under UV irradiation.

**Example 4: deposition**

0.003wt% of the ketonic radical photoinitiator dye of example 1 (BPCN) was added to ECE ref detergent A. This was used to wash a piece of woven cotton. After rinsing and drying the cotton, the cloth was clearly blue indicating the deposition of the initiator. The %reflectance of the cloth measured on a reflectometer at 570nm was 83.4 compared to 89.9 for cloth washed in ECE detergent without dye. The drop in % reflectance indicates deposition to the cloth.

In a comparative example the photoinitiator benzophenone showed no deposition to the cotton cloth.

**Example 5 Bleaching benefit**

0, 0.005 and 0.01 wt% of the radical initiator of Example 1 (BPCN) was added to were added to a washing powder. The washing powder contained 20% LAS surfactant, 30% $Na_2CO_3$, 40% NaCl, remainder minors included calcite and fluorescer and moisture. The washing powders was used to wash together 4 white woven cotton cloth, and 4 model cotton tea stain monitor (BC1). Washes were conducted in 26° French Hard water at 293K with a liquor to cloth ratio of 10:1 and 4g/L powder. Washes took 30 minutes and were followed by 2, 1 minute rinsed in 26° French Hard water at 293K. Following the wash half the fabrics were tumble dried in the dark and half the monitors were irradiated in a weatherometer (20% RH, simulated florida sunlight, 0.35 W/$m^2$ @ 340nm) for 2 hours. After drying the reflectance spectra of the clothes were measured (UV-excluded). The additional stain removal on the BC1 monitor caused by the light irradiation was calculated as $\delta\Delta R_{460}$ such that:

$$\delta\Delta R_{460} = \Delta R_{460}(\text{irradiated}) - \Delta R_{460}(\text{tumble dried})$$

and

$$\Delta R_{460} = R_{460}(\text{after wash}) - R_{460}(\text{before wash})$$

where $R_{460}$ is the % reflectance at 460nm. The more +ve $\Delta R_{460}$ is the greater the stain removal. Results are given in the table below.

| Wt% BPCN in formulation | $\delta\Delta R_{460}$ |
|---|---|
| 0 | 1.9 |
| 0.005 | 2.5 |
| 0.01 | 2.9 |

The presence of BPCN increases the stain removal when irradiated.

**Example 6: Dye Photofading**

The dyes listed in the table below were synthesised and deposited onto white cotton fabric from water containing $Na_2SO_4$, such that the reflectance at 610nm lay in the range 45 to 55%. The fabric was dried and then irradiated in a weatherometer (20% RH, simulated florida sunlight, 0.40 W/m$^2$ @ 340nm) for 4 hours.

The reflectance spectra of the cloth were measured before and after irradiation and converted to the remission function K/S such that

$$K/S = (1-R^2)/2R$$

Where R = % reflectance/100.

To correct for the reflectance of the white cloth, the K/S values for white cloth were subtracted from the dyed cloth. The K/S values are proportional to the dye loading on the cotton. Comparison of the values (550-700nm) before and after irradiation allows the %dye loss due to photofading to be calculated. The results are summarised in the table below.

The ketonic radical photoinitiator dye X=PhCO and Y =CN (BPCN) with values given in italics shows similar or less photofading than comparison dyes.

Table: Photofading of dye with structure:

| X | Y | Lambda max in water | % dye photofaded after 4 hours irradiation |
|---|---|---|---|
| CN | F | 593 | 9 |
| CN | CN | 600 | 10 |
| *PhCO* | CN | 608 | 14 |
| H | $NH_2$ | 599 | 16 |
| H | $NO_2$ | 619 | 19 |
| F | F | 593 | 26 |
| $CH_3O$ | CN | 633 | 33 |

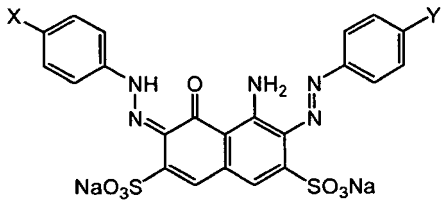

## Claims

1. A detergent composition comprising from 2 to 70 wt % of a surfactant together with a ketonic radical photoinitiator dye of the following structure (I):

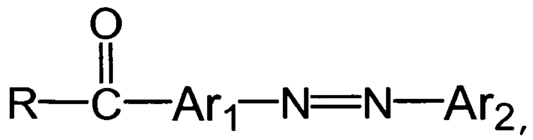

wherein the carbonyl shown in the structure is non-enolizable and the ketonic radical photoinitiator dye is comprised of an aromatic group, $Ar_1$, and the $Ar_1$ is directly covalently bound to an azo group, the azo group directly covalently bound to a second aromatic, $Ar_2$, and R is selected from:

a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms;
a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms and forms a six or five membered ring by being covalently bound to $Ar_1$.

2. A detergent composition according to claim 2, wherein $Ar_1$ and $Ar_2$ are independently selected from: phenyl; naphthyl; pyridinyl; pyrimidinyl; pyrazinyl, triazolyl; pyridazinyl; 1,3,5-triazinyl; quinolinyl; isoquinolinyl; quinoxalinyl; imidazolyl; pyrazolyl; benzimidazolyl; isothiazolyl; oxazolidinyl; pyrrolyl; carbazolyl; indolyl; isoindolyl; furanyl; benzofuranyl; isobenzofuranyl;
isoindolyl; thiophenyl; benzothiophenyl; benzo[c]thiophenyl; imidazolyl; purinyl; indazolyl; oxazolyl; benzoxazolyl; isoxazolyl; benzisoxazolyl; thiazolyl; benzothiazolyl; naphthalenyl; quinolinyl; isoquinolinyl; pyrazinyl; quinoxalinyl; pyrimidinyl; quinazolinyl; pyridazinyl; and, cinnolinyl, and wherein nitrogen containing hetrocycles are neutral or quaternized by alkyl groups.

3. A detergent composition according to claim 2, wherein $Ar_1$ and $Ar_2$ are independently selected from: phenyl; and, naphthyl.

4. A detergent composition according to any preceding claim, wherein $Ar_2$ is substituted by an amine group.

5. A detergent composition according to any preceding claim, wherein the dye radical initiator is of the form:

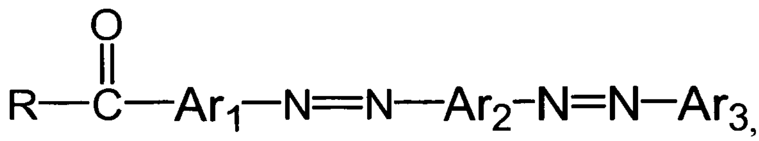

wherein $Ar_1$ and $Ar_2$ are independently selected and are as defined in any preceding claim and $Ar_3$ is independently selected and takes a definition of $Ar_1$ as defined in any preceding claim, and wherein Ar3 is optionally substituted by a further azo group which is covalently bound to a aromatic or an hetroaromatic group.

6. A detergent composition according to claim 5, wherein the dye radical initiator is of the form:

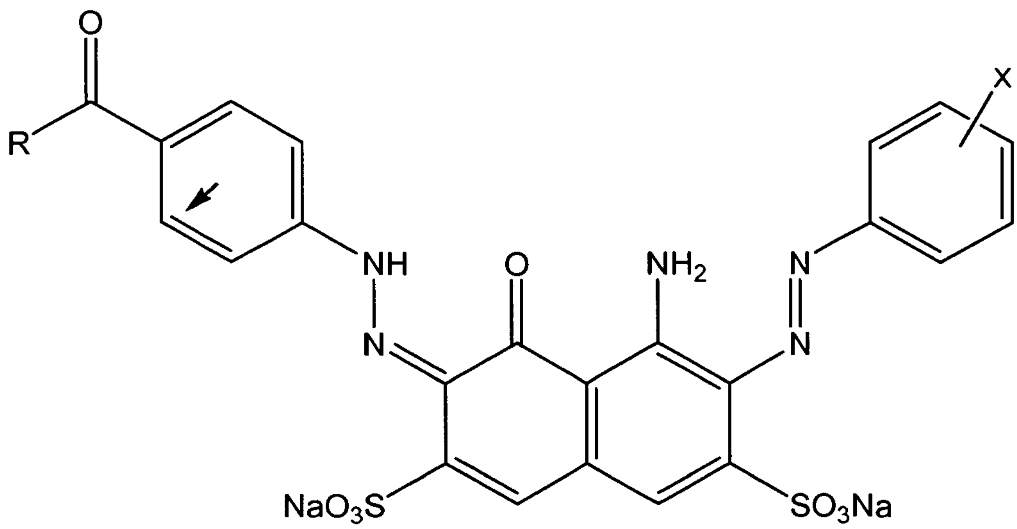

wherein:

X is para and/or ortho and is H or an electron withdrawing group; and,
R is selected from:

a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms;
a group having from 3 to 30, preferably 3 to 24, carbon atoms having from: 0 to 2 phosphorous atoms, from 0 to 3 sulphur atoms, from 0 to 3 oxygen atoms, and, from 0 to 3 nitrogen atoms and forms a six membered ring by being covalently bound at the position indicated by the arrow.

7. A detergent composition according to claim 6, wherein X is para.

8. A detergent composition according to claim 6 or 7, wherein X is selected from: -CN; -F; Cl; -Br; $-NO_2$; -CH2Cl; -CF3; -NHC(O)CH3; $-N^+(Me)_3$; $-N^+(Et)_3$; and, $-N^+(Pr)_3$.

9. A detergent composition as defined in any preceding claim, wherein:

R is selected from:

phenyl; 2,4,6-trimethylphenyl; a phosphine oxide; a phosphinate; $-CR_2R_3R_4$, wherein $R_2$, $R_3$, $R_4$ may be independently selected from -C1-C8-alkyl; -OC1-C8-alkyl; phenyl; -OH;
amine, CN, halogen, and $-SO_2$-phenyl, with the proviso that not more than one of $R_2$, $R_3$, $R_4$ is -OH, phenyl; -OH; amine, CN, halogen, and $-SO_2$-phenyl and no more than two of $R_2$, $R_3$, $R_4$ are -OC1-C8-alkyl; and, a group such that $RCOAr_1$ forms a group selected from: a quinone, thioxanthone and xanthone.

10. A detergent composition according to claim 9, wherein R is selected from: C6H5-; 2,4,6-trimethylphenyl;

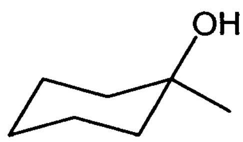 ;

p-Me-C6H4-S(O)2-C(Me)2-; Me2C(CN)- ; Me2C (OH) - ;

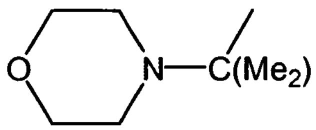

;

C6H5-C(Me)2-; C6H5-C(O)-P(O)(n-Pr)-; and, t-Bu-.

**11.** A detergent composition according to claim 10, wherein R is selected from: phenyl; and, 2,4,6-trimethylphenyl.

**12.** A detergent composition according to any preceding claims, wherein $RCOAr_1$ forms a group selected from: a quinone, thioxanthone and xanthone.

**13.** A detergent composition according to any preceding claims, wherein the dye radical initiator is a bis-azo compound.

**14.** A detergent composition according to any preceding claim, wherein the dye radical initiator is blue or violet.

**15.** A dye radical initiator of the form:

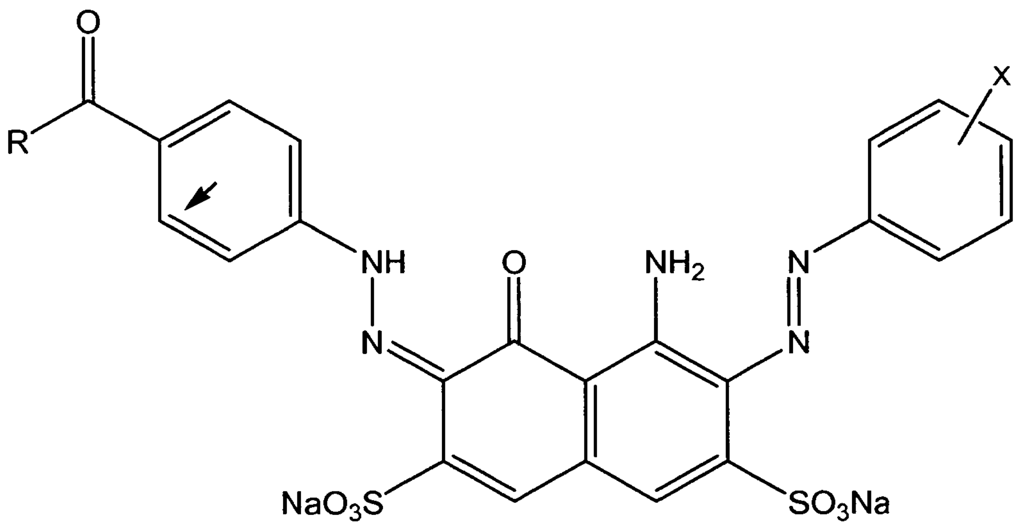

,

wherein, the carbonyl bound directly to R shown in the structure is non-enolizable, and:

X is para and/or ortho and X is selected from: H; -CN; -F; Cl; -Br; $-NO_2$; -CH2Cl; -CF3; -NHC(O)CH3; $-N^+(Me)_3$; $-N^+(Et)_3$; and, $-N^+(Pr)_3$, and,
R is selected from:

a group having from 4 to 20 carbon atoms having from: 0 to 2 phosphorous atoms, from 0 to 3 sulphur atoms, from 0 to 3 oxygen atoms, and, from 0 to 3 nitrogen atoms;
a group having from 4 to 20 carbon atoms having from: 0 to 2 phosphorous atoms, from 0 to 3 sulphur atoms, from 0 to 3 oxygen atoms, and, from 0 to 3 nitrogen atoms and forms a six membered ring by being covalently bound at the position indicated by the arrow.

**16.** A dye radical initiator according to claim 15, wherein X is para.

**17.** A dye radical initiator according to claim 15 or 16, wherein:

R is selected from:

phenyl; 2,4,6-trimethylphenyl; $-CR_2R_3R_4$, wherein $R_2$, $R_3$, $R_4$ may be independently selected from -C1-C8-alkyl; -OC1-C8-alkyl;

phenyl; -OH; amine, CN, halogen, and $-SO_2$-phenyl, with the proviso that not more than one of $R_2$, $R_3$, $R_4$ is -OH, phenyl; - OH; amine, CN, halogen, and $-SO_2$-phenyl and no more than two of $R_2$, $R_3$, $R_4$ and -OC1-C8-alkyl; and,
a group such that $RCOAr_1$ forms a group selected from: a quinone, thioxanthone and xanthone.

**18.** A dye radical initiator according to claim 17, wherein R is selected from: phenyl; and, 2,4,6-trimethylphenyl.

**19.** A dye radical initiator according to claim 17, wherein R is selected from: C6H5-;

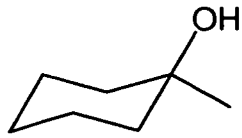

;

p-Me-C6H4-S(O)2-C(Me)2- ; Me2C(CN)- ; $Me_2C(OH)$-;

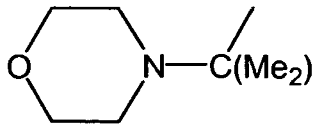

;

C6H5-C(Me)2-; and, t-Bu-.

**20.** A dye radical initiator according to claim 17, wherein $RCOAr_1$ forms a group selected from: a quinone; thioxanthone; and, xanthone.

## Patentansprüche

**1.** Waschmittelzusammensetzung,
die 2 bis 70 Gew.-% eines Tensids zusammen mit einem Photoinitiator für ein ketonisches Farbstoffradikal mit der folgenden Struktur (I) aufweist:

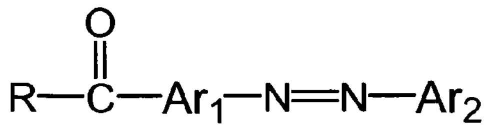

wobei das in der Struktur dargestellte Carbonyl nicht enolisierbar ist und der Photoinitiator für ein ketonisches Farbstoffradikal einen aromatischen Rest $Ar_1$ aufweist und $Ar_1$ direkt kovalent an eine Azogruppe gebunden ist, wobei die Azogruppe direkt kovalent an einen zweiten Aromaten $Ar_2$ gebunden ist, und R ausgewählt ist aus:
einem Rest mit 3 bis 30, vorzugsweise 3 bis 24 Kohlenstoffatomen, der 0 bis 2 Phosphoratome, 0 bis 3 Schwefelatome, 0 bis 3 Sauerstoffatome und 0 bis 3 Stickstoffatome aufweist,
einem Rest mit 3 bis 30, vorzugsweise 3 bis 24 Kohlenstoffatomen, der 0 bis 2 Phosphoratome, 0 bis 3 Schwefelatome, 0 bis 3 Sauerstoffatome und 0 bis 3 Stickstoffatome aufweist,
und einen 6- oder 5 gliedrigen Ring bildet, indem er kovalent an $Ar_1$ gebunden ist.

**2.** Waschmittelzusammensetzung nach Anspruch 2,
wobei $Ar_1$ und $Ar_2$ unabhängig voneinander ausgewählt sind: Phenyl, Naphthyl, Pyridinyl, Pyrimidinyl, Pyrazinyl, Triazolyl, Pyridazinyl, 1,3,5-Triazinyl, Chinolinyl, Isochinolinyl, Chinoxalinyl, Imidazolyl, Pyrazolyl, Benzimidazolyl, Isothiazolyl, Oxazolidinyl, Pyrrolyl, Carbazolyl, Indolyl, Isoindolyl, Furanyl, Benzofuranyl, Isobenzofuranyl, Isoindolyl, Thiophenyl, Benzothiophenyl, Benzo[c]thiophenyl, Imidazolyl, Purinyl, Indazolyl, Oxazolyl, Benzoxazolyl, Isoxazolyl, Benzisoxazolyl, Thiazolyl, Benzothiazolyl, Naphthalinyl, Chinolinyl, Isochinolinyl, Pyrazinyl, Chinoxalinyl, Pyrimidinyl, Chinazolinyl, Pyridazinyl und Cinnolinyl, und wobei stickstoffhaltige Heterocyclen neutral oder durch Alkylgruppen quaternisiert sind.

3. Waschmittelzusammensetzung nach Anspruch 2,
wobei $Ar_1$ und $Ar_2$ unabhängig voneinander aus Phenyl und Naphthyl ausgewählt sind.

4. Waschmittelzusammensetzung nach einem der vorstehenden Ansprüche, wobei $Ar_2$ mit einer Aminogruppe substituiert ist.

5. Waschmittelzusammensetzung nach einem der vorstehenden Ansprüche, wobei der Farbstoffradikalbildner die Formel hat:

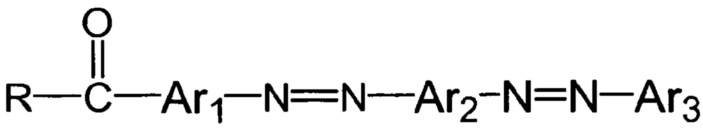

worin $Ar_1$ und $Ar_2$ unabhängig voneinander ausgewählt sind und wie in einem der vorstehenden Ansprüche angegeben sind und $Ar_3$ unabhängig voneinander ausgewählt ist und der Definition von $Ar_1$ nach einem der vorstehenden Ansprüche entspricht, und wobei $Ar_3$ gegebenenfalls mit einer weiteren Azogruppe substituiert ist, die kovalent an einen aromatischen oder heteroaromatischen Rest gebunden ist.

6. Waschmittelzusammensetzung nach Anspruch 5,
wobei der Farbstoffradikalbildner die Formel hat:

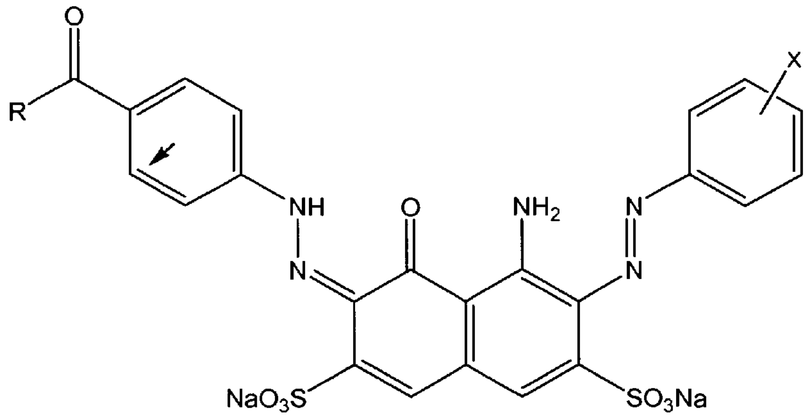

worin
X para und/oder ortho ist und H oder ein Elektronen abziehender Rest ist; und R ausgewählt ist aus:
einem Rest mit 3 bis 30, vorzugsweise 3 bis 24 Kohlenstoffatomen, der 0 bis 2 Phosphoratome, 0 bis 3 Schwefelatome, 0 bis 3 Sauerstoffatome und 0 bis 3 Stickstoffatome aufweist,
einem Rest mit 3 bis 30, vorzugsweise 3 bis 24 Kohlenstoffatomen, der 0 bis 2 Phosphoratomn, 0 bis 3 Schwefelatome, 0 bis 3 Sauerstoffatome und 0 bis 3 Stickstoffatome aufweist,
und einen 6gliedrigen Ring bildet, indem er an der mit dem Pfeil gekennzeichneten Position kovalent gebunden ist.

7. Waschmittelzusammensetzung nach Anspruch 6,
wobei X para ist.

8. Waschmittelzusammensetzung nach Anspruch 6 oder 7,
wobei X ausgewählt ist aus: -CN, -F, Cl, -Br, $-NO_2$, $-CH_2Cl$, $-CF_3$, $-NHC(O)CH_3$, $-N^+(Me)_3$, $-N^+(Et)_3$ und $-N^+(Pr)_3$.

9. Waschmittelzusammensetzung nach einem der vorstehenden Ansprüche, wobei R ausgewählt ist aus:

Phenyl; 2,4,6-Trimethylphenyl; einem Phosphinoxid; einem Phosphinat; $-CR_2R_3R_4$, wobei $R_2$, $R_3$ und $R_4$ unabhängig voneinander ausgewählt sein können aus $-C_1$-$C_8$-Alkyl; $-OC_1$-$C_8$-alkyl; Phenyl; -OH; Amin, CN, Halogen und -S02-phenyl, mit der Maßgabe, dass nicht mehr als einer der Reste $R_2$, $R_3$ und $R_4$ gleich -OH, Phenyl; -OH; Amin, CN, Halogen und $-SO_2$-phenyl sind, und nicht mehr als zwei der Reste $R_2$, $R_3$ und $R_4$ gleich

$-OC_1-C_8$-alkyl sind; und
ein Rest, wie der Rest $RCOAr_1$, einen Rest bildet, der aus einem Chinon, Thioxanthon und Xanthon ausgewählt ist.

**10.** Waschmittelzusammensetzung nach Anspruch 9, wobei R ausgewählt aus $C_6H_5$-; 2,4,6-Trimethylphenyl;

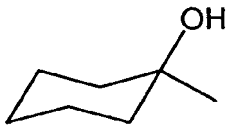 ;

p-Me-$C_6H_4$-$S(O)_2$-$C(Me)_2$-; $Me_2C(CN)$-; $Me_2C(OH)$-;

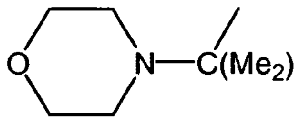 ;

$C_6H_5$-$C(Me)_2$-; $C_6H_5$-C(O)-P(O)(n-Pr)-und t-Bu-.

**11.** Waschmittelzusammensetzung nach Anspruch 10, wobei R aus Phenyl und 2,4,6-Trimethylphenyl ausgewählt ist.

**12.** Waschmittelzusammensetzung nach einem der vorstehenden Ansprüche, wobei $RCOAr_1$ einen Rest bildet, der aus einem Chinon, Thioxanthon und Xanthon ausgewählt ist.

**13.** Waschmittelzusammensetzung nach einem der vorstehenden Ansprüche, wobei der Farbstoffradikalbildner eine Bisazoverbindung ist.

**14.** Waschmittelzusammensetzung nach einem der vorstehenden Ansprüche, wobei der Farbstoffradikalbildner blau oder violett ist.

**15.** Farbstoffradikalbildner mit der Formel:

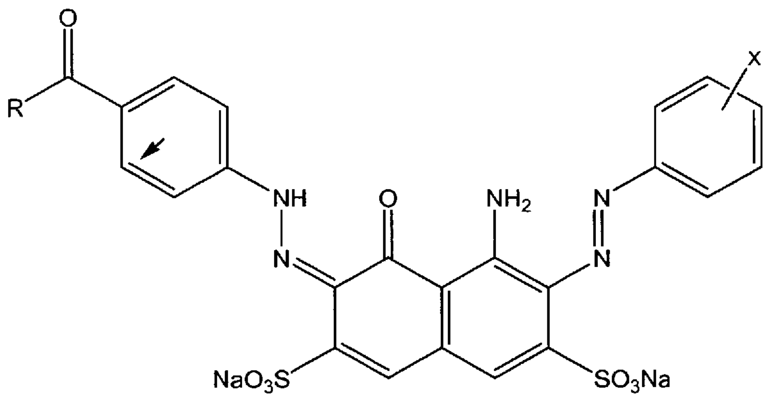

wobei das in der Struktur dargestellte, direkt an R gebundene Carbonyl nicht enolisierbar ist und:

X para und/oder ortho ist und X ausgewählt ist aus H, -CN, -F, Cl, -Br, $-NO_2$, $-CH_2Cl$, $-CF_3$, $-NHC(O)CH_3$, $-N^+(Me)_3$, $-N^+(Et)_3$ und $-N^+(Pr)_3$; und
R ausgewählt ist aus
einem Rest mit 4 bis 20 Kohlenstoffatomen, der 0 bis 2 Phosphoratome, 0 bis 3 Schwefelatome, 0 bis 3 Sauerstoffatome und 0 bis 3 Stickstoffatome aufweist,
einem Rest mit 4 bis 20 Kohlenstoffatomen, der 0 bis 2 Phosphoratome, 0 bis 3 Schwefelatome, 0 bis 3 Sauerstoffatome und 0 bis 3 Stickstoffatome aufweist,

und einen 6gliedrigen Ring bildet, indem er an der mit dem Pfeil gekennzeichneten Position kovalent gebunden ist.

**16.** Farbstoffradikalbildner nach Anspruch 15, wobei X para ist.

**17.** Farbstoffradikalbildner nach Anspruch 15 oder 16, wobei R ausgewählt ist aus:

Phenyl; 2,4,6-Trimethylphenyl; $-CR_2R_3R_4$, wobei $R_2$, $R_3$ und $R_4$ unabhängig voneinander ausgewählt sein können aus $-C_1$-$C_8$-Alkyl; -OC1-C8-alkyl; Phenyl; -OH; Amin, CN, Halogen und $-SO_2$-phenyl, mit der Maßgabe, dass nicht mehr als einer der Reste $R_2$, $R_3$ und $R_4$ gleich -OH, Phenyl; -OH; Amin, CN, Halogen und $-SO_2$-phenyl sind, und nicht mehr als zwei der Reste $R_2$, $R_3$ und $R_4$ gleich $-OC_1$-$C_8$-alkyl sind; und
ein Rest, wie der Rest $RCOAr_1$, einen Rest bildet, der aus einem Chinon, Thioxanthon und Xanthon ausgewählt ist.

**18.** Farbstoffradikalbildner nach Anspruch 17, wobei R aus Phenyl und 2,4,6-Trimethylphenyl ausgewählt ist.

**19.** Farbstoffradikalbildner nach Anspruch 17, wobei R ausgewählt aus $C_6H_5$-;

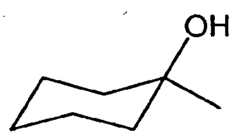 ;

p-Me-$C_6H_4$-$S(O)_2$-$C(Me)_2$-; $Me_2C(CN)$-; $Me_2C(OH)$-;

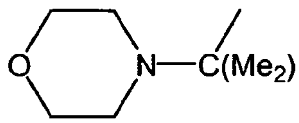 ;

$C_6H_5$-$C(Me)_2$ und t-Bu-.

**20.** Farbstoffradikalbildner nach Anspruch 17, wobei $RCOAr_1$ einen Rest bildet, der aus einem Chinon, Thioxanthon und Xanthon ausgewählt ist.

**Revendications**

**1.** Composition de détergent comprenant de 2 à 70 % en poids d'un surfactant conjointement avec un colorant photoinitiateur radicalaire cétonique de la structure (I) suivante :

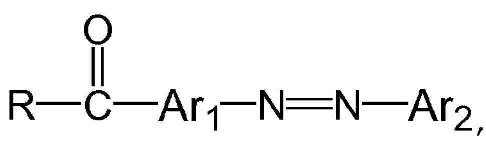

dans laquelle, le groupe carbonyle représenté dans la structure est non énolisable, et le colorant photoinitiateur radicalaire cétonique est composé d'un groupe aromatique, $Ar_1$, et le groupe $Ar_1$ est lié de manière covalente directement à un groupe azo, le groupe azo étant lié de manière covalente directement à un second groupe aromatique $Ar_2$, et R est choisi parmi :

un groupe comportant de 3 à 30, de préférence 3 à 24, atomes de carbone comportant de : 0 à 2 atomes de phosphore, de 0 à 3 atomes de soufre, de 0 à 3 atomes d'oxygène, et de 0 à 3 atomes d'azote ;
un groupe comportant de 3 à 30, de préférence 3 à 24, atomes de carbone comportant de : 0 à 2 atomes de phosphore, de 0 à 3 atomes de soufre, de 0 à 3 atomes d'oxygène, et de 0 à 3 atomes d'azote et forme un cycle à six ou cinq chaînons par liaison covalente à $Ar_1$.

**2.** Composition de détergent selon la revendication 2, dans laquelle les groupes $Ar_1$ et $Ar_2$ sont choisis indépendamment parmi les groupes : phényle ; naphtyle ; pyridinyle ; pyrimidinyle ; pyrazinyle ; triazolyle ; pyridazinyle ; 1,3,5-triazinyle ; quinoléinyle ; isoquinoléinyle ; quinoxalinyle ; imidazolyle ; pyrazolyle ; benzimidazolyle ; isothiazolyle ; oxazolidinyle ; pyrrolyle ; carbazolyle ; indolyle ; isoindolyle ; furanyle ; benzofuranyle ; isobenzofuranyle ; isoindolyle ; thiophényle ; benzothiophényle ; benzo[c]thiophényle ; imidazolyle ; purinyle ; indazolyle ; oxazolyle ; benzoxazolyle ; isoxazolyle ; benzisoxazolyle ; thiazolyle ; benzothiazolyle ; naphtalényle ; quinoléinyle ; isoquinoléinyle ; pyrazinyle ; quinoxalinyle ; pyrimidinyle ; quinazolinyle ; pyridazinyle ; et cinnolinyle, et où les hétérocycles contenant de l'azote sont neutres ou quaternisés par des groupes alkyle.

**3.** Composition de détergent selon la revendication 2, dans laquelle les groupes $Ar_1$ et $Ar_2$ sont choisis indépendamment parmi les groupes : phényle ; et naphtyle.

**4.** Composition de détergent selon l'une quelconque des revendications précédentes, dans laquelle le groupe $Ar_2$ est substitué par un groupe amine.

**5.** Composition de détergent selon l'une quelconque des revendications précédentes, dans laquelle le colorant initiateur radicalaire est sous la forme :

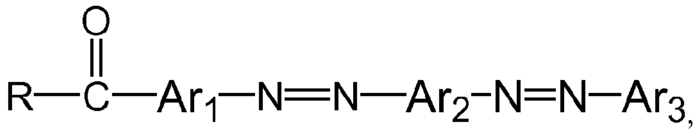

dans laquelle les groupes $Ar_1$ et $Ar_2$ sont choisis indépendamment et sont tels que définis dans l'une quelconque des revendications précédentes et $Ar_3$ est choisi indépendamment et prend une définition de $Ar_1$ tel que défini dans l'une quelconque des revendications précédentes, et où $Ar_3$ est éventuellement substitué par un autre groupe azo qui est lié de manière covalente à un groupe aromatique ou hétéroaromatique.

**6.** Composition de détergent selon la revendication 5, dans laquelle le colorant initiateur radicalaire est sous la forme :

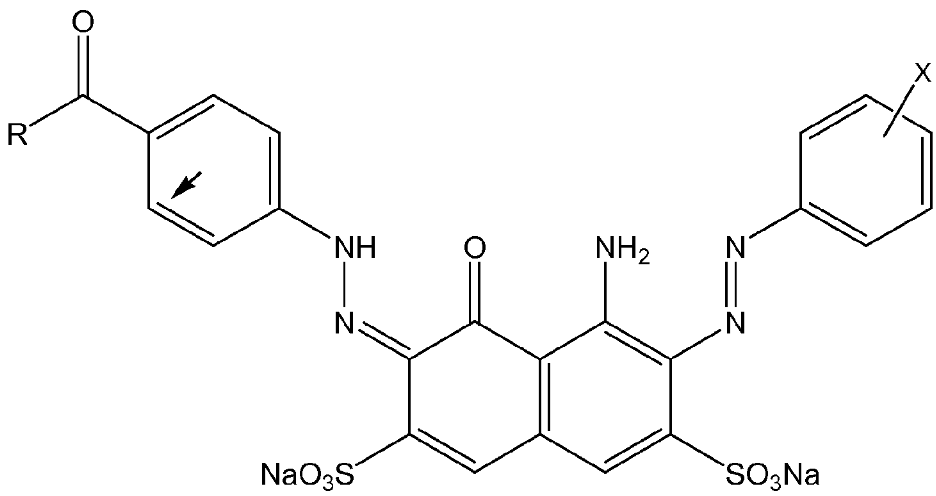

,

dans laquelle :

X est en para et/ou ortho et représente H ou un groupe accepteur d'électron ; et

R est choisi parmi :

un groupe comportant de 3 à 30, de préférence 3 à 24, atomes de carbone comportant de : 0 à 2 atomes de phosphore, de 0 à 3 atomes de soufre, de 0 à 3 atomes d'oxygène, et de 0 à 3 atomes d'azote ;
un groupe comportant de 3 à 30, de préférence 3 à 24, atomes de carbone comportant de : 0 à 2 atomes de phosphore, de 0 à 3 atomes de soufre, de 0 à 3 atomes d'oxygène, et de 0 à 3 atomes d'azote et forme un cycle à six chaînons par liaison covalente à la position indiquée par la flèche.

**7.** Composition de détergent selon la revendication 6, dans laquelle X est en para.

**8.** Composition de détergent selon la revendication 6 ou 7, dans laquelle X est choisi parmi les groupes : -CN ; -F ; Cl ; -Br ; $-NO_2$ ; $-CH_2Cl$ ; $-CF_3$ ; $-NHC(O)CH_3$ ; $-N^+(Me)_3$ ; $-N^+(Et)_3$; et $-N^+(Pr)_3$.

**9.** Composition de détergent tel que défini dans l'une quelconque des revendications précédentes, dans laquelle :

R est choisi parmi les groupes :

phényle ; 2,4,6-triméthylphényle ; un oxyde de phosphine ; un phosphinate ; $-CR_2R_3R_4$, où $R_2$, $R_3$, $R_4$ peuvent être choisis indépendamment parmi les groupes alkyle en $C_1$ à $C_8$ ; -O-alkyle en $C_1$ à $C_8$ ; phényle ; -OH ; amine, CN, halogène, et $-SO_2$-phényle, à condition que pas plus d'un de $R_2$, $R_3$, $R_4$ représente un groupe -OH, phényle ; amine, CN, halogène, et $-SO_2$-phényle et pas plus de deux de $R_2$, $R_3$, $R_4$ représentent un groupe -O-alkyle en $C_1$ à $C_8$ ; et
un groupe tel que $RCOAr_1$ forme un groupe choisi parmi : une quinone, thioxanthone et xanthone.

**10.** Composition de détergent selon la revendication 9, dans laquelle R est choisi parmi les groupes : $C_6H_5$ ; 2,4,6-triméthylphényle ;

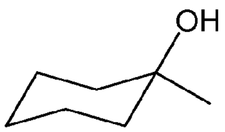 ;

$P-Me-C_6H_4-S(O)_2-C(Me)_2-$ ; $Me_2C(CN)-$ ; $Me_2C(OH)-$ ;

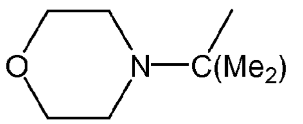 ;

$C_6H_5-C(Me)_2-$ ; $C_6H_5-C(O)-P(O)(n-Pr)-$ ; et t-Bu-.

**11.** Composition de détergent selon la revendication 10, dans laquelle R est choisi parmi les groupes : phényle ; et 2,4,6-triméthylphényle.

**12.** Composition de détergent selon l'une quelconque des revendications précédentes, dans laquelle $RCOAr_1$ forme un groupe choisi parmi : une quinone, thioxanthone et xanthone.

**13.** Composition de détergent selon l'une quelconque des revendications précédentes, dans laquelle le colorant initiateur radicalaire est un composé bis-azoïque.

**14.** Composition de détergent selon l'une quelconque des revendications précédentes, dans laquelle le colorant initiateur radicalaire est bleu ou violet.

**15.** Colorant initiateur radicalaire de la forme :

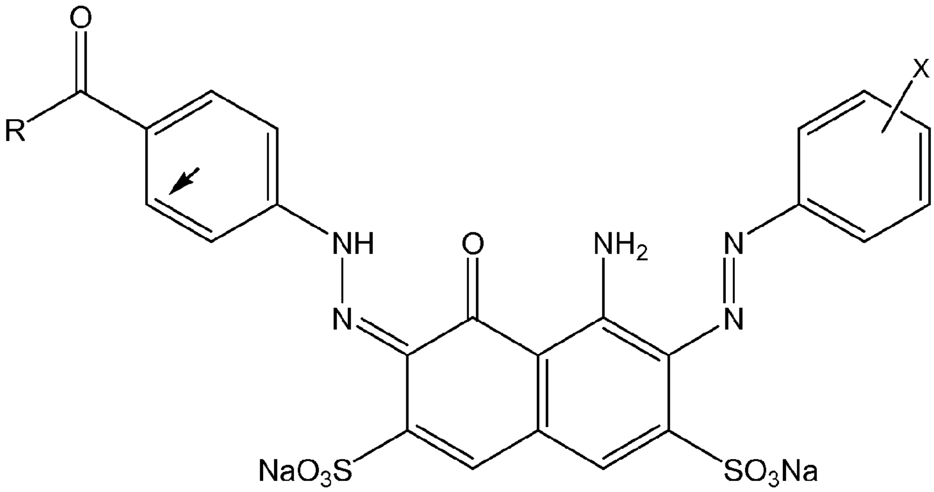

,

dans laquelle le groupe carbonyle lié directement à R représenté sur la structure est non énolisable, et :

X est en para et/ou ortho et X est choisi parmi les groupes : H ; -CN ; -F ; Cl ; -Br ; $-NO_2$ ; $-CH_2Cl$ ; $-CF_3$ ; -NHC(O)$CH_3$ ; $-N^+(Me)_3$; $-N^+(Et)_3$ ; et $-N^+(Pr)_3$, et
R est choisi parmi :

un groupe comportant de 4 à 20 atomes de carbone comportant de : 0 à 2 atomes de phosphore, de 0 à 3 atomes de soufre, de 0 à 3 atomes d'oxygène, et de 0 à 3 atomes d'azote ;
un groupe comportant de 4 à 20 atomes de carbone comportant de : 0 à 2 atomes de phosphore, de 0 à 3 atomes de soufre, de 0 à 3 atomes d'oxygène, et de 0 à 3 atomes d'azote et forme un cycle à six chaînons par liaison covalente à la position indiquée par la flèche.

**16.** Colorant initiateur radicalaire selon la revendication 15, dans laquelle X est en para.

**17.** Colorant initiateur radicalaire selon la revendication 15 ou 16, dans lequel :

R est choisi parmi les groupes :

phényle ; 2,4,6-triméthylphényle ; $-CR_2R_3R_4$, où $R_2$, $R_3$, $R_4$ peuvent être choisis indépendamment parmi les groupes alkyle en $C_1$ à $C_8$ ; -O-alkyle en $C_1$ à $C_8$ ; phényle ; -OH ; amine, CN, halogène, et $-SO_2$-phényle, à condition que pas plus d'un de $R_2$, $R_3$, $R_4$ représente un groupe -OH, phényle ; -OH ; amine, CN, halogène, et $-SO_2$-phényle et pas plus de deux de $R_2$, $R_3$, $R_4$ représentent un groupe -O-alkyle en $C_1$ à $C_8$ ; et
un groupe tel que $RCOAr_1$ forme un groupe choisi parmi : une quinone, thioxanthone et xanthone.

**18.** Colorant initiateur radicalaire selon la revendication 17, dans lequel R est choisi parmi les groupes : phényle ; et 2,4,6-triméthylphényle.

**19.** Colorant initiateur radicalaire selon la revendication 17, dans lequel R est choisi parmi les groupes : $C_6H_5$- ;

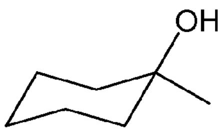

;

P-Me-$C_6H_4$-$S(O)_2$-$C(Me)_2$- ; $Me_2C(CN)$- ; $Me_2C(OH)$-;

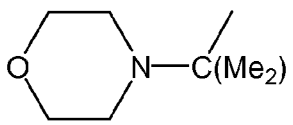 ;

$C_6H_5$-C(Me)$_2$- ; et t-Bu-.

**20.** Colorant initiateur radicalaire selon la revendication 17, dans lequel $RCOAr_1$ forme un groupe choisi parmi : une quinone, thioxanthone et xanthone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0144127 A
- WO 0144424 A, Unilever
- WO 04072217 A, Unilever
- WO 02088292 A
- WO 2006024612 A
- WO 2007082803 A
- WO 2008017570 A
- WO 2007039042 A, Unilever
- EP 328177 A, Unilever
- EP 070074 A
- EP 346995 A, Unilever
- EP 0239910 A
- EP 0384070 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- International Buyers Guide. CFTA Publications, 1992
- Chemicals Buyers Directory 80th Annual Edition. Schnell Publishing Co, 1993
- **POUCHER.** *Journal of the Society of Cosmetic Chemists,* 1955, vol. 6 (2), 80
- Industrial Dyes. Wiley VCH, 2003
- *J.Phys.Chem.,* 1996, vol. 100, 556-564